# EUROPEAN PATENT SPECIFICATION

(11) **EP 4 047 056 B1**
(45) Date of publication and mention of the grant of the patent: **16.07.2025**
(21) Application number: 20903179.8
(22) Date of filing: 15.10.2020
(51) Int. Cl.: C08L 71/02, C09D 4/00, C08L 33/14, C08F 220/28, B33Y 70/00, C09D 11/38, C09D 11/101, B29C 64/40, B33Y 10/00, B29C 64/112

(54) **COMPOSITION FOR SUPPORT STRUCTURE IN 3D INKJET PRINTING AND PREPARATION METHOD THEREFOR**
ZUSAMMENSETZUNG FÜR EINE TRÄGERSTRUKTUR IN 3D-TINTENSTRAHLDRUCK UND VERFAHREN ZU IHRER HERSTELLUNG
COMPOSITION POUR STRUCTURE DE SUPPORT DANS UNE IMPRESSION À JET D'ENCRE 3D ET SON PROCÉDÉ DE PRÉPARATION

(30) Priority: 20.12.2019 CN 201911325181
(43) Date of publication of application: 24.08.2022
(73) Proprietor: ZHUHAI SAILNER 3D TECHNOLOGY CO., LTD., Zhuhai, Guangdong 519000 (CN)
(72) Inventor: YU, Jia, Zhuhai, Guangdong 519000 (CN); YANG, Qiancheng, Zhuhai, Guangdong 519000 (CN)
(74) Representative: Dr. Gassner & Partner mbB
(86) International application number: PCT/CN2020/121051
(87) International publication number: WO 2021/120809

(56) References cited:
- EP-A1- 3 508 335
- WO-A1-2018/149758
- WO-A1-2019/130321
- WO-A1-2019/167948
- CN-A- 103 524 332
- CN-A- 105 924 882
- CN-A- 106 660 266
- CN-A- 107 501 477
- CN-A- 107 501 477
- CN-A- 108 136 677
- CN-A- 111 004 491
- US-A1- 2018 230 246

## Description

### TECHNICAL FIELD

The application relates to a composition for printing and a preparation method thereof, in particular to a composition for 3D inkjet printing of a support structure and a preparation method thereof, and belongs to the technical field of 3D printing.

### BACKGROUND

In a 3D inkjet printing process, for example, when printing an object having a suspended structure, a suspended part below the suspended structure of the object needs a printing support structure so that a target object can be printed; after the target object is formed, the support structure needs to be removed from the target object without affecting the surface accuracy of the target object. Therefore, the support structure not only needs to have sufficient mechanical strength to support the target object, but also needs to be easily removed from the target object.

The types of existing support materials can be divided into a mechanically removable support material, a water-soluble support material, a water-swellable support material, an alkali-soluble support material and the like according to the removal mode of the support structure; where for the mechanically removable support material, in the process of removing the support structure, the target object can be damaged due to the impact action of a mechanical force ,and the support structure in fine holes is difficult to be removed; for the water-soluble support material and the water-swellable support material, they have slow dissolution rate and swelling rate in water, respectively, especially when the support structure has a large volume, the removal rate of the support structure is slow; for the alkali-soluble support material, in the process of removing the support structure, the alkali-soluble support material quickly reaches saturation over time, and the removal rate of the support structure is slowed down, and thus the alkali solution needs to be replaced frequently, thereby, on one hand, increasing the removal cost of the support structure, and on the other hand, causing environmental pollution due to use of a large amount of alkali solution.

It is known that the Chinese invention patent CN 1081366777 A discloses a support material composition, which includes a non-curable water-miscible polymer, a first water-miscible curable material, and at least, a second water-miscible curable material; where the second water-miscible curable material is selected to interfere with the interaction of a plurality of molecules between a plurality of polymer chains formed after exposure of the first water-miscible material to the curing energy. In the known prior art, by using the second curable material to interfere with the polymer reaction of the first curable material, the crosslinking degree of the polymer is reduced, so that the support structure formed by light-curing can be easily and effectively removed in the alkaline solution, reducing the dissolution time, increasing the dissolution rate, and not damaging the mechanical properties of the support material. However, due to the fact that the molecular structure of the second water-miscible curable material contains an unsaturated double bond, the unsaturated double bond can also participate in the light-curing reaction in the light-curing reaction process, which has a certain influence on the dissolution rate in the alkali solution when increasing the mechanical strength of the light-cured product.

WO 2019/167948 A1 discloses a composition for photocurable support materials for inkjet 3D modeling, containing a water-soluble ethylenically unsaturated monomer that contains an ionic group and a counter ion; and the content of water in 100% by mass of this composition for photocurable support materials is 10% by mass or less. It is preferable that this composition for photocurable support materials for inkjet 3D modeling additionally contains a photopolymerization initiator.

EP 3508335 A1 discloses a photocurable support material composition for an inkjet 3D printer, comprising a water-soluble ethylenically unsaturated monomer containing an ionic group and a counter ion, and comprising a photopolymerization initiator. The ionic group is preferably at least one selected from a group consisting of carboxylic acid group, phosphoric acid group, and sulfonic acid group. The counter ion is preferably at least one selected from a group consisting of sodium ion, potassium ion, and ammonium ion.

US 2018/230246 A1 discloses novel support material formulations, characterized as providing a cured support material with improved dissolution rate, while maintaining sufficient mechanical strength. The formulations comprise a water-miscible non-curable polymer, a first water-miscible, curable material and a second, water-miscible material that is selected capable of interfering with intermolecular interactions between polymeric chains formed upon exposing the first water-miscible material to curing energy.

WO 2019/130321 A1 discloses formulations usable as support material in additive manufacturing such as 3D inkjet printing and which feature a viscosity of no more than 50cPs at 35°C. The formulations are composed of at least one hydrophilic curable material which provides, when hardened, a material that is dissolvable or swellable in an aqueous solution; and at least one non-curable material that is capable of being swelled by said hardened material formed of said at least one curable material.

Therefore, how to provide a support material composition, a light-cured product of which has an increased dissolution rate in an alkaline solution while having increased support strength, has become a problem to be solved.

### SUMMARY

The present application is defined in appended set of claims. The present application provides a composition for 3D inkjet printing, including a specific functional reaction-promoting material, which is used in combination with a light-curable bulk material. The composition has significantly improved conversion rate of light-curing reaction, and the light-cured product of the composition has a significantly improved dissolution rate in alkaline solution while having an enhanced support strength.

The present application provides a method for preparing a composition for 3D inkjet printing, which can effectively prepare a composition for 3D inkjet printing.

The present application further provides a 3D inkjet printing device, including an inkjet print head that is capable of performing printing by using the composition for 3D inkjet printing.

The present application further provides a 3D inkjet printing method, which is capable of printing, by the 3D inkjet printing device, a support structure, using the composition for 3D inkjet printing of the support structure.

The present application further provides a support structure, which is printed using the composition for 3D inkjet printing of the support structure by the 3D inkjet printing device.

The composition for 3D inkjet printing of the support structure provided by the present application includes the following components based on a total weight of the composition: 18-40 parts by weight of a light-curable bulk material, 2-30 parts by weight of a functional reaction-promoting material represented by the general formula (I) mentioned below, a non-curable water-miscible material, a photoinitiator and an auxiliary agent, where the functional reaction-promoting material contains carboxyl group and reactive hydrogen in a molecular structure thereof and the reactive hydrogen can react with a peroxy free radical.

In a solution of the present application, the reactive hydrogen refers to hydrogen on a carbon atom closest to a functional group, and if COOH is a functional group and R₃ and R₄ are selected from hydrogen, the hydrogen is reactive hydrogen; and if R₁ is a functional group, hydrogen on a carbon atom connected to R₁ is also reactive hydrogen.

In the present application, the functional reaction-promoting material has a structure represented by the following general formula (I): 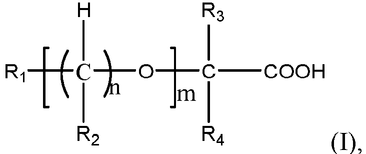 in which, R₁, R₂, R₃ and R₄ are independently selected from at least one of the group consisting of hydrogen, hydroxyl, carboxyl, alkoxy, aryloxy, nitrogen-containing heterocyclic ring, oxygen-containing heterocyclic ring and benzene ring, and when R₁ is hydrogen, at least one of R₃ and R₄ is selected from hydrogen; n and m are independently selected from an integer greater than or equal to 1, and n≤7 and m≤14.

In a solution of the present application, the functional reaction-promoting material having the structure represented by general formula (I) can be obtained by a conventional method in the art, for example, it can be synthesized according to the method described in CN 103524332 A or is commercially available.

Further, at least one of R₁, R₂, R₃ and R₄ is hydrogen.

Further, in the general formula (I), n≤2, and m≤2.

More further, the alkoxy group is a C1-3 low level alkoxy group.

Specifically, Table 1 lists some of specific structures of the functional reaction-promoting material, but the functional reaction-promoting material used in the composition of the present application is not limited to those in Table 1, all functional reaction-promoting materials meeting the structure of the general formula (I) in the present application are within the protection scope of the present application.

**Table 1**

| R₁ | R₂ | R₃ | R₄ | n | m | Structural formula |
|---|---|---|---|---|---|---|
| CH₃O | H | H | H | 1 | 1 | 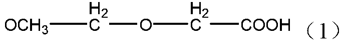 |
| CH₃O | H | H | H | 2 | 2 | 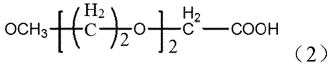 |
| CH₃O | OH | H | H | 4 | 14 | 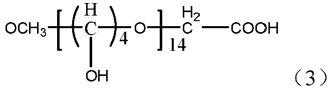 |
| CH₃O | H | Benzene ring | H | 2 | 2 | 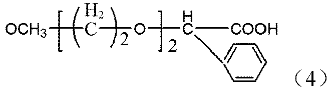 |
| H | COOH | H | Benzene ring | 1 | 1 | 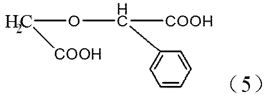 |
| OH | H | CH₃O | H | 2 | 2 | 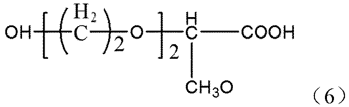 |
| H | Benzene ring | H | H | 1 | 1 | 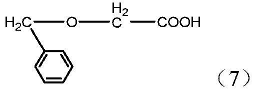 |
| COOH | H | H | H | 1 | 2 | 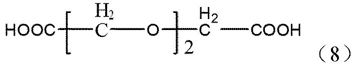 |
| COOH | H | H | Ethylene oxide | 1 | 2 | 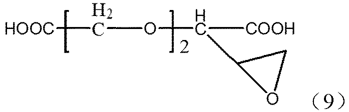 |
| OH | H | Ethylene oxide | H | 1 | 2 | 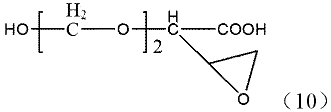 |
| CH₃O | H | OH | H | 2 | 2 | 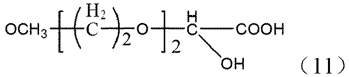 |
| CH₃O | H | COOH | H | 1 | 2 | 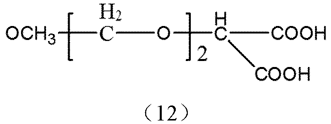 |
| CH₃O | Ethylene oxide | H | COOH | 1 | 2 | 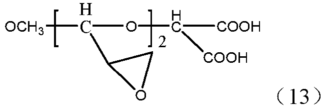 |
| CH₃O | OH | COOH | H | 1 | 2 | 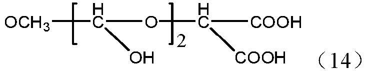 |
| CH₃O | H | COOH | OH | 1 | 2 | 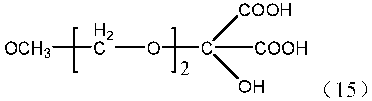 |
| OH | H | COOH | CH₃O | 2 | 2 | 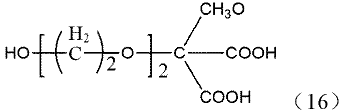 |
| Trimethyl triazacyclic nonyl | H | H | H | 1 | 2 | 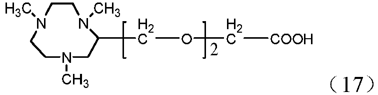 |
| Ethylene oxide | H | H | H | 1 | 2 | 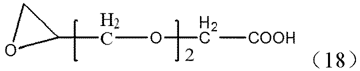 |
| Benzene ring | H | H | H | 1 | 2 | 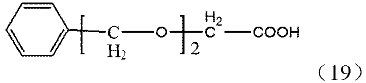 |
| CH₃O | H | H | COOH | 7 | 8 | 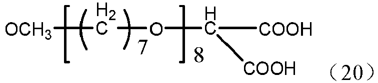 |

In another specific embodiment of the present application, the functional reaction-promoting material is 5-10 parts by weight. When the weight of the functional reaction-promoting material is within the range, the conversion rate of the light-curing reaction of the light-curable bulk material is up to 80-95%.

Further, the non-curable water-miscible material is 48-78 parts by weight, the photoinitiator is 1-5 parts by weight, and the auxiliary agent is 0.4-5 parts by weight.

Further, the light-curable bulk material is a (meth)acrylate compound and/or a (meth)acrylamide compound.

In a specific embodiment of the present application, the (meth)acrylate compound is a monofunctional (meth)acrylate compound and/or a multifunctional (meth)acrylate compound.

Further, the monofunctional (meth)acrylate compound is selected from one or more of glycidyl methacrylate (molecular weight 142), 3-(acryloyloxy)-2-hydroxypropyl methacrylate (molecular weight 214), 2-(methacryloyloxy)ethyl 3-hydroxybutyrate (molecular weight 216), hydroxyethyl acrylate (molecular weight 116), 4-hydroxybutyl acrylate (molecular weight 144), polyethylene glycol (200) monoacrylate (molecular weight 450), polyethylene glycol (400) monoacrylate (molecular weight 912), methoxypolyethylene glycol (400) monoacrylate (molecular weight 842), and methoxy polyethylene glycol (550) monoacrylate (molecular weight 620).

More further, the multifunctional (meth)acrylate compound is selected from one or more of pentaerythritol tetraacrylate (molecular weight 352), pentaerythritol triacrylate (molecular weight 298), polyethylene glycol (200) diacrylate (molecular weight 336), polyethylene glycol (400) diacrylate (molecular weight 508), and polyethylene glycol (600) diacrylate (molecular weight 708).

Further, the (meth)acrylamide compound is selected from one or more of acryloylmorpholine (molecular weight 141), dimethylacrylamide (molecular weight 99), diethylacrylamide (molecular weight 127), dimethylaminopropyl acrylamide (molecular weight 156) and hydroxyethyl acrylamide (molecular weight 115).

In another specific embodiment of the present application, based on the total weight of the composition, a proportion of the monofunctional compounds with a molecular weight greater than or equal to 300 in the light-curable bulk material is 15-30 parts by weight, and a proportion of the compounds with a molecular weight greater than 50 and less than 277 in the light-curable bulk material is 3-6 parts by weight. In a solution of the present application, the solubility of the light-cured product of the composition in the alkaline solution is better by controlling the proportions of the compounds with different molecular weight ranges in the light-curable bulk material.

Further, based on the total weight of the composition, the multifunctional (meth)acrylate compound in the light-curable bulk material accounts for 0-4 parts by weight.

In another specific embodiment of the present application, the light-curable bulk material is selected from at least one of a (meth)acrylate compound and a (meth)acrylamide compound, molecular weights of which are greater than or equal to 300, and is selected from at least one of a (meth)acrylate compound and a (meth) acrylamide compound, molecular weights of which are greater than 50 and less than 277.

Further, the composition has a viscosity of 20-70 mPa.s (20-70 cps) and a surface tension of 26.7-33.5 mN/m at 25°C, and has a viscosity of 8-11 mPa.s (8-11) and a surface tension of 26.7-33.5 mN/m at 30-70 °C.

In one specific embodiment of the present application, the composition is obtained by mixing the components under the condition of avoiding light-induced polymerization reaction of the components.

In the solution of the present application, the non-curable water-miscible material is a polyol.

In the light-curing reaction process of the composition, the non-curable water-miscible material is infiltrated into a net-like structure formed by a light-curing reaction, so that the dissolution rate of the product, which is formed by light-curing of the composition, in water or alkaline solution is further improved. The "water-miscible material" is liquid itself and is at least partially soluble in water or dispersed in water, further for example at least 50% of its molecules are soluble in water when contacted (e.g. mixed) with water.

Further, the polyol may be one or more selected from polyol 3165, polyol 3610, ethylene oxide-tetrahydrofuran copolymer (EO/THF copolymer), polypropylene glycol, polyglycerol, 1,2-propylene glycol, tripropylene glycol monomethyl ether, dipropylene glycol monomethyl ether, triethylene glycol dimethyl ether, polyethylene glycol monomethyl ether (400), polyethylene glycol (400) and polyethylene glycol (200).

In embodiments of the present application, the photoinitiator is a free radical photoinitiator.

Further, the free radical photoinitiator can be one or more selected from the group consisting of benzoin ethyl ether, benzoin α,α-dimethyldibenzoylketal, α,α-diethoxyacetophenone, 2-hydroxy-2-methyl-phenylacetone-1, 1-hydroxy-cyclohexylphenyl ketone, 2-isopropyl thioxanthone, 2-hydroxy-2- methyl-p-hydroxyethyl ether phenyl acetone-1, 2-methyl-1-[4-methylthiophenyl]-2-morpholinyl-1-acetone, [2-benzyl-2-dimethylamino-1- (4-morpholinophenyl) butanone-1], benzoyl formate, 2,4,6-trimethylphenylacyl-ethoxy-phenylphosphine oxide, 2,4,6-trimethylphenylacyl-diphenylphosphine oxide, phenyl bis (2,4,6-trimethylbenzoyl) phosphine oxide and 4-p-toluenemercapto benzophenone.

Further, the auxiliary agent is selected from a surfactant and/or a polymerization inhibitor.

The surfactant added in the composition for 3D inkjet printing of the support structure has certain solubility in water or an aqueous solution, and the main function of the surfactant is to adjust the surface tension of the composition to enable the composition to be normally used for printing, while improving the fluidity of the composition and the wetting performance of the composition to the substrate. The main function of adding the polymerization inhibitor is to prevent the polymerization reaction of free radicals in the composition and improve the storage stability of the composition, and the polymerization inhibitor is preferably a product that both improves the storage stability and has no influence on the light-curing reaction of the composition.

More further, the surfactant is selected from at least one of polyether-modified siloxane and non-silicone-based polyether. The polyether-modified siloxane can be, for example, various polyether-modified siloxane surfactants on the market, for example, it can be at least one under the trade names of BYK 345, BYK 346, BYK 333 and the like from BYK company, can be at least one under the trade names of TEGO wet 270, TEGO Glide 450 and the like from TEGO company, and can be at least one under the trade names of AFCONA-3580, AFCONA-3585, AFCONA-3587, AFCONA-3588 and the like from AFCONA company. The non-silicone-based polyether can be various non-silicone-based polyether surfactants on the market, for example, it can be at least one under the trade names of BYK800D or the like from BYK company, can be at least one under the trade names of TEGO WET 500, TEGO Airex 920, TEGO Airex 921 and the like from TEGO company, and can be at least one under the trade names of AFCONA-3500, AFCONA-3590 and the like from AFCONA company.

Still further, the polymerization inhibitor can be at least one under the trade names of GENORAD*16, GENORAD*18, GENORAD*20, GENORAD*22 and the like from Genorad, can be at least one under the trade names of Tinuvin234, Tinuvin770, Irganox245, Cyanogen S100, Cyanogen 130 and the like from BASF, can be at least one under the trade names of Irgastab UV10, Irgastab UV 22D and the like from Ciba, can be at least one of MEHQ and the like from Amarico, US, and can be 510 polymerization inhibitor and the like from Shanghai Boer Chemical Reagent Co., Ltd.

The application further provides a method for preparing the composition for 3D inkjet printing of the support structure, which includes performing the following steps under the condition of avoiding light-induced polymerization reaction of the components of the composition:
1) uniformly mixing the components other than the photoinitiator to obtain a first mixture; then adding the photoinitiator into the first mixture to obtain a second mixture;
2) filtering the second mixture, to collect a filtrate, which is the composition for the 3D inkjet printing of the support structure.

Further, in step 1) of the method, the order of adding the components in the process of obtaining the first mixture is not limited.

Further, in step 2) of the method, filtering can be carried out in a multiple filtering manner, especially in a stage-by-stage filtering manner. Specifically, the second mixture can be filtered at least twice by using microporous filter membrane, where a pore diameter of the microporous filter membrane adopted in a former filtration is greater than a pore diameter of the microporous filter membrane adopted in a latter filtration, and a pore diameter of the microporous filter membrane used in the last filtration is smaller than a pore diameter of a nozzle of a print head in the 3D inkjet printing device to ensure good printing fluency when making the support structure by the 3D inkjet printing, preventing clogging the nozzle of the print head.

In a specific implementation process of the application, the second mixture is treated in a two-stage filtration mode, where a first-stage filtration adopts a glass fiber membrane with a pore diameter of 0.45-0.6µm, and a second-stage filtration adopts a polypropylene membrane with a pore diameter of 0.2µm.

Further, the collected filtrate can be subjected to degassing treatment. Degassing treatment of the filtrate further ensures that the composition has very good fluency in the use, and avoids the interference of bubbles in the composition which can cause interruption of the printing line and thus affect the forming accuracy of the support structure.

Specifically, the operation mode of the degassing treatment can be reduced pressure degassing, atmospheric pressure degassing or heating degassing, or any two or more of these degassing modes can be selected. Generally, the time for the degassing treatment is controlled to be not more than 5 hours. In a specific implementation process of the present application, the time for the degassing treatment is generally controlled to be 0.5-3 hours.

The 3D inkjet printing device provided in the present application includes an inkjet print head, and the inkjet print head can perform printing using a composition for the 3D inkjet printing of the support structure.

According to the 3D inkjet printing method provided in the present application, a printing process includes printing a support structure, by the 3D inkjet printing device, using the composition for 3D inkjet printing of the support structure.

The present application further provides a support structure, which is printed by the 3D inkjet printing device using the composition for 3D inkjet printing of the support structure.

In a solution of the present application, the support structure includes any structure other than a target object in a printing process of the target object, and certainly, the composition provided in the present application can also be used for printing a target object that meets a requirement.

In the present application, a functional reaction-promoting material, whose molecular structure contains reactive hydrogen, is added to the composition. As a donor of the reactive hydrogen, the functional reaction-promoting material can reactivate free radicals which have been deactivated due to the influence of polymerization inhibition of oxygen, and/or convert free radicals which have been deactivated due to the influence of polymerization inhibition of oxygen, to obtain active alkoxy free radicals and active hydroxyl free radicals; and sufficient active free radicals under the irradiation of ultraviolet light enable the light-curable bulk material to sufficiently undergo light-curing reaction, so that the conversion rate of light-curing of the light-curable bulk material is improved, and thus the amount of the light-curable bulk material, which is needed to reach required supporting mechanical strength of the support structure at the same exposure time and intensity in the 3D inkjet printing process, is greatly reduced; the reduced amount of the light-curable bulk material in the composition for 3D inkjet printing of the support structure in the present application results in a greatly improved dissolution rate of the cured composition when the cured composition is placed in an alkaline solution. In the present application, the molecular structure of the functional reaction-promoting material contains a carboxyl group, the carboxyl group itself and the reaction product thereof can react with alkali in an alkaline solution to accelerate the dissolution rate of the composition of the light-cured support material in the alkaline solution; moreover, the molecular structure of the functional reaction-promoting material containing carboxyl group results in water solubility or hydrophility and better solubility in an alkaline solution.

The solution of the present application has the following advantages:
1. The composition provided in the present application has significantly improved conversion rate of light-curing reaction; and the light-cured product thereof has a significantly improved dissolution rate in an alkaline solution while having increased support strength.
2. The support structure provided by the present application has high support strength. The support structure sample printed according to the standard GB/T 14484-2008 has at least 0.1 MPa of support strength, and can effectively support the printing of a target object.
3. The support structure provided by the present application can be rapidly dissolved in an alkaline solution, improving the post-treatment efficiency of the target object. For example, the dissolution time of a support structure sample with a dimension of 20 mm x 20 mm x 20 mm in the alkaline solution is less than 90 minutes.
4. The composition provided by the present application contains less light-curable bulk material on the premise of achieving the same support strength of the cured product (i.e., the printed support structure), improves light-curing reaction rate, reduces radiation intensity or radiation duration, and saves energy.
5. The composition provided by the present application has a viscosity of 20-70 mPa.s (20-70 cps) and a surface tension of 26.7-33.5 mN/m at room temperature of 25°C, and a viscosity of 8-11 mPas.s (8-11 cps) and a surface tension of 26.7-33.5 mN/m at working temperature (30-70°C). The composition provided by the present application can not only perform a normal inkjet printing at a higher temperature, such as 70°C, but also can perform a normal inkjet printing at a lower working temperature, such as 30 °C, thereby prolonging the service life of the print head.

### DESCRIPTION OF EMBODIMENTS

### Example 1

The present example provides a composition for 3D inkjet printing of a support structure, and the composition has the following components as shown in Table 2:

**Table 2 Components of the composition for 3D inkjet printing of the support structure in Example 1**

| Component | Compound/Trade name | Weight |
|---|---|---|
| Light-curable bulk material | Polyethylene glycol (600) diacrylate | 3.5g |
| | Hydroxyethyl acrylamide | 3g |
| | 4-hydroxybutyl acrylate | 3g |
| | Polyethylene glycol (400) monoacrylate | 15g |
| Functional reaction-promoting material | 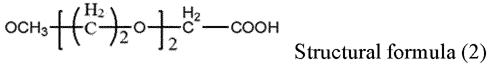 | 10g |
| Non-curable water-miscible material | 1,2-propylene glycol | 35g |
| | Polyethylene glycol (200) | 24.08g |
| | Dipropylene glycol monomethyl ether | 2.2g |
| Photoinitiator | 2,4,6-(trimethylbenzoyl)diphenylphosphine oxide | 1.5g |
| | 1-hydroxy-cyclohexyl-phenyl ketone | 1.5g |
| Auxiliary agent | TEGO wet 270 | 0.1g |
| | TEGO WET 500 | 1g |
| | MEHQ | 0.06g |
| | GENORAD*22 | 0.06g |

The functional reaction-promoting material in Table 2 can be purchased from TIC Shanghai Development Co., Ltd. or Sigma-Aldrich (Shanghai) Trade Co., Ltd. The functional reaction-promoting material in the present example is purchased from TIC Shanghai Development Co., Ltd.

The preparation method of the composition for 3D inkjet printing of the support structure is as follows:
(1) placing all components except the photoinitiator in a glass container, and stirring with a stirrer to obtain a uniformly mixed first mixture; then adding photoinitiator into the first mixture, and continuing stirring until the photoinitiator is completely dissolved, to obtain a second mixture;
(2) performing a primary filtration on the second mixture by using a 0.6µm glass fiber membrane, and then performing a secondary filtration by using a 0.2µm polypropylene membrane (PP membrane) to obtain a filtrate; and
(3) performing a reduced pressure filtration for 1 hour under a vacuum degree of 0.1 MPa, to remove bubbles in the filtrate, and finally obtain a composition for 3D inkjet printing of the support structure.

### Example 2

The present example provides a composition for 3D inkjet printing of a support structure, and the composition has the following components as shown in Table 3:

**Table 3 Components of the composition for 3D inkjet printing of the support structure in Example 2**

| Component | Compound/Trade name | Weight |
|---|---|---|
| Light-curable bulk material | Polyethylene glycol (400) diacrylate | 2.5g |
| | Hydroxyethyl acrylamide | 5.5g |
| | Methoxy polyethylene glycol (550) monoacrylate | 20g |
| Functional reaction-promoting material | 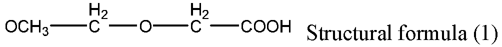 | 8g |
| | 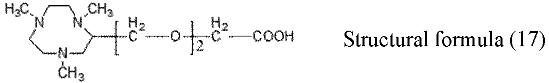 | 4g |
| Non-curable Water-miscible material | 1,2-propylene glycol | 35g |
| | Polyethylene glycol (400) | 18.82g |
| | Tripropylene glycol monomethyl ether | 3.5g |
| Photoinitiator | Phenylbis (2,4,6 - trimethylbenzoyl) phosphine oxide | 0.8 g |
| | 1-hydroxy-cyclohexyl-phenyl ketone | 1.2g |
| Auxiliary agent | BYK345 | 0.1g |
| | AFCONA-3590 | 0.38g |
| | GENORAD*16 | 0.1g |
| | GENORAD*22 | 0.1g |

The functional reaction-promoting material in Table 3 can be purchased from Shanghai Ziyu Material Science and Technology Co., Ltd. or Tokyo Chemical Industry Co., Ltd. The functional reaction-promoting material in the present example is purchased from Shanghai Ziyu Material Science and Technology Co., Ltd.

The preparation method of the composition for 3D inkjet printing of the support structure in the example is basically the same as that in Example 1, except that the components used are correspondingly replaced, and a heating degassing mode is adopted in the step (3) of the preparation method, to heat the filtrate obtained in the step (2) to about 40°C for degassing treatment, where the degassing time is 50 minutes.

### Example 3

The present example provides a composition for 3D inkjet printing of a support structure, and the composition has the following components as shown in Table 4:

**Table 4 Components of the composition for 3D inkjet printing of the support structure in Example 3**

| Component | Compound/Trade name | Weight |
|---|---|---|
| Light-curable bulk material | Hydroxyethyl acrylate | 3 g |
| | Polyethylene glycol (400) monoacrylate | 15 |
| Functional reaction-promoting material | 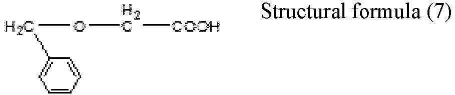 | 30 |
| Non-curable water-miscible material | Polyethylene glycol(200) | 20g |
| | Polyol 3165 | 14.5g |
| | Polyethylene glycol monomethyl ether (400) | 15.5g |
| Photoinnitiator | Phenyl bis (2,4,6-trimethylbenzoyl) phosphine oxide | 1 g |
| Auxiliary agent | BYK333 | 0.2g |
| | AFCONA-3500 | 0.5g |
| | Tinuvin770 | 0.1g |
| | Irganox245 | 0.2g |

The functional reaction-promoting material in Table 4 can be purchased from Nanjing Chemical Reagent Co., Ltd. and Xiya Chemical Technology (Shandong) Co., Ltd. The functional reaction-promoting material in the present example is purchased from Nanjing Chemical Reagent Co., Ltd.

In the present example, the preparation method of the composition for 3D inkjet printing of the support structure is basically the same as that in Example 1, except that the components used are correspondingly replaced, and in the step (3) of the preparation method, the specific time of reduced-pressure degassing is adjusted to be 2 hours.

### Example 4

The present example provides a composition for 3D inkjet printing of a support structure, and the composition has the following components as shown in Table 5:

**Table 5 Components of the composition for 3D inkjet printing of the support structure in Example 4**

| Component | Compound/Trade name | Weight |
|---|---|---|
| Light-curable bulk material | Polyethylene glycol (200) monoacrylate | 15g |
| | Acryloylmorpholine | 3g |
| Functional reaction-promoting material | 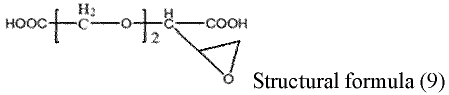 | 2g |
| Non-curable water-miscible material | Polyethylene glycol monomethyl ether (400) | 32g |
| | Polyethylene glycol (400) | 25.2g |
| | Dipropylene glycol monomethyl ether | 18.1g |
| Photoinnitiator | 2-isopropyl thioxanthone | 1g |
| | 2-methyl-1-[4-methylthio phenyl]-2-morpholinyl-1-acetone | 1g |
| Auxiliary agent | BYK346 | 0.3g |
| | BYK800D | 2g |
| | rgastab UV10 | 0.2g |
| | Irgastab UV 22D | 0.2g |

The functional reaction-promoting material in Table 5 can be purchased from Shanghai Ziyu Material Science and Technology Co., Ltd. and Tokyo Chemical Industry Co., Ltd. The functional reaction-promoting material in the present example is purchased from Shanghai Ziyu Material Science and Technology Co., Ltd.

In the present example, the preparation method of the composition for 3D inkjet printing of the support structure is basically the same as that in Example 1, except that the components used are correspondingly replaced, and in step (3) of preparation method, the degassing treatment is carried out by standing at an atmospheric pressure, where the standing time is 3h.

### Example 5

The present example provides a composition for 3D inkjet printing of a support structure, and the composition has the following components as shown in Table 6:

**Table 6 Components of the composition for of 3D inkjet printing of the support structure in Example 5**

| Component | Compound/Trade name | Weight |
|---|---|---|
| Light-curable bulk material | Dimethyl acrylamide | 5g |
| | Polyethylene glycol (400) monoacrylate | 20g |
| Functional reaction-promoting material | 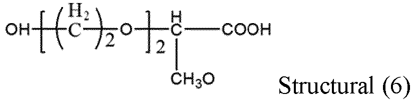 | 12g |
| Non-curable water-miscible material | 1,2-propylene glycol | 30g |
| | Polyethylene glycol (400) | 23.8g |
| | Glycerol | 2.2g |
| Photoinnitiator | 2-isopropyl thioxanthone | 1g |
| | 2-methyl-1-[4-methylthio phenyl]-2-morpholinyl-1-acetone | 1g |
| Auxiliary agent | AFCONA-3500 | 4g |
| | GENORAD*16 | 0.5g |
| | GENORAD*22 | 0.5g |

The functional reaction-promoting material in Table 6 can be purchased from Shanghai Ziyu Material Science and Technology Co., Ltd. and Tokyo Chemical Industry Co., Ltd. The functional reaction-promoting material in the present example is purchased from Shanghai Ziyu Material Science and Technology Co., Ltd.

The preparation method of the composition for 3D inkjet printing of the support structure in the present example is basically the same as that in Example 1, except that the components used are correspondingly replaced, and in step (3) of the preparation method, a heating degassing mode is adopted, heating the filtrate obtained in the step (2) to about 50°C for degassing treatment, where the degassing time is 30 minutes.

### Example 6

The present example provides a composition for 3D inkjet printing of the support structure, and the composition has the following components as shown in Table 7:

**Table 7 Components of the composition for 3D inkjet printing of the support structure in Example 6**

| Component | Compound/Trade name | Weight |
|---|---|---|
| Light-curable bulk material | Polyethylene glycol (200) diacrylate | 4g |
| | Hydroxyethyl acrylamide | 3g |
| | Dimethylaminopropyl acrylamide | 3 |
| | Polyethylene glycol (400) monoacrylate | 30 |
| Functional reaction-promoting material | 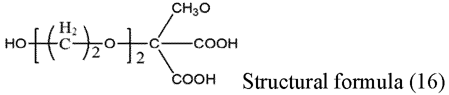 | 5g |
| Non-curable water-miscible material | Triethylene glycol dimethyl ether | 30g |
| | Polyol 3610 | 18.78g |
| Photoinnitiator | 2,4,6(trimethyl benzoyl) diphenylphosphine oxide | 2.5g |
| | 1- hydroxy-cyclohexyl-phenyl ketone | 2.5g |
| Auxiliary agent | TEGO Glide 450 | 0.12g |
| | TEGO WET 500 | 0.5g |
| | Tinuvin770 | 0.3g |
| | Irganox245 | 0.3g |

The functional reaction-promoting material in Table 7 can be purchased from Shanghai Ziyu Material Science and Technology Co., Ltd. or TCI Europe. The functional reaction-promoting material in the present example is purchased from Shanghai Ziyu Material Science and Technology Co., Ltd.

The preparation method of the composition for 3D inkjet printing of the support structure in the present example is basically the same as that in Example 1, except that the components used for 3D inkjet printing of the support structure are correspondingly replaced.

### Example 7

The present example provides a composition for 3D inkjet printing of the support structure, and the composition has the following components as shown in Table 8:

**Table 8 Components of the composition for 3D inkjet printing of the support structure in Example 7**

| Component | Compound/Trade name | Weight |
|---|---|---|
| Light-curable bulk material | Pentaerythritol triacrylate | 1.5g |
| | Diethylacrylamide | 3g |
| | Glycidyl methacrylate | 3g |
| | Polyethylene glycol (400) monoacrylate | 25g |
| Functional reaction-promoting material | 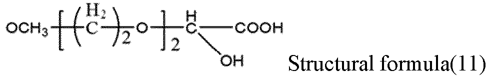 | 10g |
| Non-curable water-miscible material | Polyol 3165 | 16.2g |
| | Ethylene oxide tetrahydrofuran copolymer (EO/THF copolymer) | 22.54g |
| | Tripropylene glycol methyl ether | 16g |
| Photoinnitiator | Phenyl bis(2,4,6-trimethylbenzoyl) phosphine oxide | 0.8g |
| | 1- hydroxy-cyclohexyl-phenyl ketone | 1.2g |
| Auxiliary agent | BYK345 | 0.1g |
| | BYK 800D | 0.46g |
| | GENORAD*16 | 0.1g |
| | GENORAD*22 | 0.1g |

The functional reaction-promoting material in Table 8 can be purchased from Shanghai Ziyu Material Science and Technology Co., Ltd. or Simachem Corporation. The functional reaction-promoting material in the present example is purchased from Shanghai Ziyu Material Science and Technology Co., Ltd.

The preparation method of the composition for 3D inkjet printing of the support structure in the present example is basically the same as that in Example 1, except that the components used for 3D inkjet printing of the support structure are correspondingly replaced.

### Example 8

The present example provides a composition for 3D inkjet printing of the support structure, and the composition has the following components as shown in Table 9:

**Table 9 Components of the composition for 3D inkjet printing of the support structure in Example 8**

| Component | Compound/Trade name | Weight |
|---|---|---|
| Light-curable bulk material | Pentaerythritol tetraacrylate | 0. 5g |
| | Polyethylene glycol (400) diacrylate | 1g |
| | Hydroxyethyl acrylate | 3g |
| | Polyethylene glycol (400) monoacrylate | 15g |
| Functional reaction-promoting material | 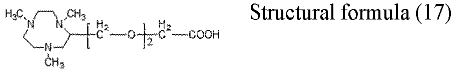 | 30g |
| Non-curable water-miscible material | Polyethylene glycol (200) | 20g |
| | Polyol 3615 | 10g |
| | Polyethylene glycol monomethyl ether (400) | 18.1g |
| Photoinnitiator | Phenyl bis (2,4,6-trimethylbenzoyl) phosphine oxide | 0.8g |
| | 1-hydroxy-cyclohexyl-phenyl ketone | 1.2g |
| Auxiliary agent | BYK345 | 0.1g |
| | Tinuvin770 | 0.1g |
| | Irganox245 | 0.2g |

The functional reaction-promoting material in Table 9 can be purchased from Shanghai Ziyu Material Science and Technology Co., Ltd. or Tokyo Chemical Industry Co., Ltd. The functional reaction-promoting material in the present example is purchased from Shanghai Ziyu Material Science and Technology Co., Ltd.

The preparation method of the composition for 3D inkjet printing of the Support Structure in the present example is basically the same as that in Example 1, except that the components used for 3D inkjet printing of the support structure are correspondingly replaced.

### Comparative Example 1

The present comparative example provides a composition for 3D inkjet printing of the support structure, and the composition has the following components:

**Table 10 Components of the composition for 3D inkjet printing of the support structure in Comparative example 1**

| Component | Compound/Trade name | Weight |
|---|---|---|
| Light-curable bulk material | Polyethylene glycol (600) diacrylate | 5g |
| | Hydroxyethyl acrylamide | 5.5g |
| | 4-hydroxybutyl acrylate | 8g |
| | Polyethylene glycol (400) monoacrylate | 25g |
| Non-curable water-miscible material | 1,2-propylene glycol | 30g |
| | Polyethylene glycol (200) | 20g |
| | Dipropylene glycol monomethyl ether | 2.2g |
| Photoinnitiator | 2,4,6 (trimethylbenzoyl) diphenylphosphine oxide | 1.5g |
| | 1-hydroxy-cyclohexyl-phenyl ketone | 1.5g |
| Auxiliary agent | TEGO wet 270 | 0.1g |
| | TEGO WET 500 | 1g |
| | MEHQ | 0.1g |
| | GENORAD*22 | 0.1g |

The preparation method of the composition for 3D inkjet printing of the support structure in Comparative Example 1 is basically the same as that of Example 1, except that the components used for 3D inkjet printing of the support structure are correspondingly replaced.

### Example 9

The present example provides a 3D inkjet printing device, including an inkjet print head, where the inkjet print head can be used to print a support structure with the composition for 3D inkjet printing of the support structure according to any one of the foregoing examples. Further, a target object can also be printed on the support structure.

### Example 10

The present example provides a printing method for printing, by the 3D inkjet printing device of Example 9, a support structure by using the composition for 3D inkjet printing of the support structure according to any one of Examples 1-8.

Performance test on the composition for 3D inkjet printing of the support structure in the above examples and comparative example is conducted, where the test method is as follows, and the test results are shown in Table 11.

### 1. Viscosity

The viscosity of the composition is tested using a DV-I Digital Viscometer.

### 2. Surface Tension

The surface tension of the composition is tested by adopting a BZY-1 full-automatic surface tension meter.

### 3. Support Strength

The composition in the present application is applied to a Sailner J5013D light-curing inkjet printer to print a cube sample (i.e., a product sample or a support structure sample after the composition is cured) with a size specification required in GB/T 14484-2008 Plastics-Determination of Bearing Strength, and the support strength of the sample is determined by a compression test carried out by a LLOYD tension meter of model LR5K PLUS, the test is operated under standard compression combined parameters and the support strength is expressed in MPa with respect to the cube described above.

### 4. Dissolution Rate

The composition is applied to a Seine J501 3D light-curing inkjet printer, setting the temperature of the spray head to 30-70°C, to print a cube with its length, width and height being 20mm x 20mm x 20mm, and after printing is completed, the cube (which can be a product sample or a support structure sample after the composition is cured) is immersed in 800mL of aqueous solution of sodium hydroxide with a weight ratio of 2%, and then the time for the cube, such as the support structure sample, to be completely dissolved is recorded.

### 5. Conversion Rate of Light Curing Reaction

By utilizing the infrared spectrum analysis technology, an area of characteristic absorption peak of the C=C double bond of the composition at 648-1589 cm-1 before and after curing is determined (A1 before curing, and A2 after curing) and conversion rate of the light-curing reaction is determined by the formula C% = (A1-A2)/A1 * 100%.

**Table 11 Test results of performance parameters of examples and comparative example**

| | Example 1 | Example 2 | Example 3 | Example 4 | Example 5 | Example 6 | Example 7 | Example 8 | Comparative example 1 |
|---|---|---|---|---|---|---|---|---|---|
| Viscosity (cps) of the composition at room temperature (25°C) | 34 | 67 | 55 | 20 | 45 | 70 | 60 | 42 | 65 |
| Surface tension (mN/m) of the composition at room temperature (25°C) | 30.7 | 31 | 31.5 | 26.7 | 33.5 | 29.7 | 32.5 | 28.6 | 33 |
| Viscosity (cps) of the composition at working temperature | 9 (50°C) | 11 (70°C) | 10 (60°C) | 8 (30°C) | 9 (50°C) | 11 (70°C) | 11 (65°C) | 9 (50°C) | 11 (70°C) |
| Surface tension (mN/m) of the composition at working temperature | 30.2 (50°C) | 30.8 (70°C) | 31.3 (60°C) | 26.7 (30°C) | 33.4 (50°C) | 29.5 (70°C) | 32.3 (65°C) | 28.5 (50°C) | 32.8 (70°C) |
| Support strength (MPa) of the support structure | 0.2 | 0.18 | 0.15 | 0.1 | 0.16 | 0.25 | 0.22 | 0.2 | 0.1 |
| Dissolution time (min) of the support structure in alkaline solution | *50* | 75 | 55 | 70 | 60 | 90 | 85 | 70 | 180 |
| Conversion rate of light-curing reaction of the composition | 90 | 90 | 95 | 75 | 92 | 80 | 88 | 90 | 40 |

It can be seen that the composition in Examples 1-8 has a significantly improved conversion rate of light-curing reaction compared with the comparative example without adding a functional reaction-promoting material, and its light-cured product, i.e., the support structure, has a significantly improved dissolution rate in an alkaline solution while having increased support strength. The dissolution time of the printed support structure sample of 20mm x 20mm x 20mm is less than or equal to 90 minutes in an alkaline solution.

On the premise of obtaining the same support strength of the cured product (i.e., the printed support structure), the amount of light-curable bulk material in the above-mentioned compositions is less, and the light-curing reaction rate is significantly improved.

The composition provided by the present application can perform normal inkjet printing at a high temperature, such as 70°C, and also can perform normal inkjet printing at a low working temperature, such as 30°C, prolonging the service life of the print head.

## Claims

1. A composition for 3D inkjet printing of a support structure, wherein the composition comprises 18-40 parts by weight of a light-curable bulk material, 2-30 parts by weight of a functional reaction-promoting material, a non-curable water-miscible material, a photoinitiator and an auxiliary agent based on a total weight of the composition, the functional reaction-promoting material contains carboxyl group and reactive hydrogen in a molecular structure thereof, and the reactive hydrogen is capable of reacting with a peroxy free radical;
wherein the functional reaction-promoting material has a structure represented by the following general formula (I): 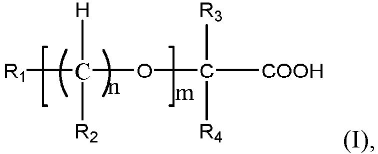
R₁, R₂, R₃ and R₄ are independently selected from at least one of the group consisting of hydrogen, hydroxyl, carboxyl, alkoxy, aryloxy, nitrogen-containing heterocyclic ring, oxygen-containing heterocyclic ring and benzene ring, and when R₁ is hydrogen, at least one of R₃ and R₄ is selected from hydrogen; and n and m are independently selected from an integer greater than or equal to 1, n≤7 and m≤14;
wherein the light-curable bulk material is a (meth) acrylate compound and/or a (meth) acrylamide compound.

2. The composition according to claim 1, wherein at least one of R₁, R₂, R₃ and R₄ is hydrogen.

3. The composition according to claim 1 or 2, wherein n≤2 and m≤2.

4. The composition according to any one of claims 1 to 3, wherein the alkoxy is a C1-3 low level alkoxy group.

5. The composition according to any one of claims 1 to 4, wherein the functional reaction-promoting material is 5-10 parts by weight, the non-curable water-miscible material is 48-78 parts by weight, the photoinitiator is 1-5 parts by weight, and the auxiliary agent is 0.4-5 parts by weight.

6. The composition according to any one of claims 1 to 5, wherein the non-curable water-miscible material is a polyol.

7. The composition according to claim 6, wherein based on the total weight of the composition, a monofunctional compound having a molecular weight greater than or equal to 300 in the light-curable bulk material accounts for 15-30 parts by weight, and a compound having a molecular weight greater than 50 and less than 277 in the light-curable bulk material accounts for 3-6 parts by weight, and a multifunctional (meth)acrylate compound in the light-curable bulk material accounts for 0-4 parts by weight based on the total weight of the composition.

8. The composition according to any one of claims 1 to 7, wherein the composition has a viscosity of 20-70 mPa·s and a surface tension of 26.7-33.5 mN/m at 25°C, and has a viscosity of 8-11 mPa·s and a surface tension of 26.7-33.5 mN/m at 30-70 °C, wherein the viscosity is tested by using a DV-I Digital Viscometer, and the surface tension is tested by using a BZY-1 full-automatic surface tension meter.

9. The composition according to any one of claims 1 to 8, wherein the composition is obtained by mixing components thereof under a condition of avoiding light-induced polymerization reaction of the components.

10. A method for preparing the composition for 3D inkjet printing of a support structure according to any one of claims 1 to 9, comprising the following steps under the condition of avoiding the light-induced polymerization reaction of the components of the composition:
1) uniformly mixing the components other than the photoinitiator to obtain a first mixture; then adding the photoinitiator into the first mixture to obtain a second mixture; and
2) filtering the second mixture, to collect a filtrate, which is the composition for 3D inkjet printing of the support structure.

11. A 3D inkjet printing device, comprising an inkjet print head, wherein the inkjet print head is capable of performing printing by using the composition for 3D inkjet printing of a support structure according to any one of claims 1 to 9.

12. A 3D inkjet printing method, wherein a printing process thereof comprises printing, by the 3D inkjet printing device according to claim 11, a support structure by using the composition for 3D inkjet printing of a support structure according to any one of claims 1 to 9.

13. The 3D inkjet printing method according to claim 12, further comprising printing a target object under support of the support structure.

14. A support structure, printed by the 3D inkjet printing device according to claim 11 and using the composition for 3D inkjet printing of a support structure according to any one of claims 1 to 9.

## Patentansprüche

1. Zusammensetzung zum 3D-Tintenstrahldrucken einer Trägerstruktur, wobei die Zusammensetzung 18 bis 40 Gewichtsteile eines lichthärtbaren Grundmaterials, 2 bis 30 Gewichtsteile eines funktionellen, reaktionsfördernden Materials, ein nicht härtbares, wassermischbares Material, einen Photoinitiator und ein Hilfsmittel, bezogen auf ein Gesamtgewicht der Zusammensetzung, umfasst, wobei das funktionelle, reaktionsfördernde Material eine Carboxylgruppe und reaktiven Wasserstoff in seiner Molekularstruktur enthält und der reaktive Wasserstoff in der Lage ist, mit einem freien Peroxy-Radikal zu reagieren;
wobei das funktionelle reaktionsfördernde Material eine Struktur hat, die durch die folgende allgemeine Formel (I) dargestellt wird: 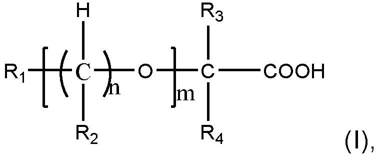
wobei R₁, R₂, R₃ und R₄ unabhängig voneinander ausgewählt sind aus mindestens einem aus der Gruppe bestehend aus Wasserstoff, Hydroxyl, Carboxyl, Alkoxy, Aryloxy, Stickstoff enthaltendem heterocyclischem Ring, Sauerstoff enthaltendem heterocyclischem Ring und Benzolring, und wenn R₁ Wasserstoff ist, ist mindestens einer von R₃ und R₄ ausgewählt aus Wasserstoff; und n und m sind unabhängig voneinander ausgewählt aus einer ganzen Zahl größer oder gleich 1, wobei n≤7 und m≤14 ist;
wobei das lichthärtbare Grundmaterial eine (Meth)acrylatverbindung und/oder eine (Meth)acrylamidverbindung ist.

2. Zusammensetzung nach Anspruch 1, wobei mindestens einer der Reste R₁, R₂, R₃ und R₄ Wasserstoff ist.

3. Zusammensetzung nach Anspruch 1 oder 2, wobei n≤2 und m≤2 ist.

4. Zusammensetzung nach einem der Ansprüche 1 bis 3, wobei das Alkoxy eine niedere C1-3-Alkoxygruppe ist.

5. Zusammensetzung nach einem der Ansprüche 1 bis 4, wobei das funktionelle reaktionsfördernde Material 5-10 Gewichtsteile, das nicht härtbare wassermischbare Material 48-78 Gewichtsteile, der Photoinitiator 1-5 Gewichtsteile und das Hilfsmittel 0,4-5 Gewichtsteile ausmacht.

6. Zusammensetzung nach einem der Ansprüche 1 bis 5, wobei das nicht härtbare wassermischbare Material ein Polyol ist.

7. Zusammensetzung nach Anspruch 6, wobei, bezogen auf das Gesamtgewicht der Zusammensetzung, eine monofunktionelle Verbindung mit einem Molekulargewicht von größer oder gleich 300 in dem lichthärtbaren Grundmaterial 15-30 Gewichtsteile ausmacht, und eine Verbindung mit einem Molekulargewicht von größer als 50 und kleiner als 277 in dem lichthärtbaren Grundmaterial 3-6 Gewichtsteile ausmacht, und eine multifunktionelle (Meth)acrylatverbindung in dem lichthärtbaren Grundmaterial 0-4 Gewichtsteile, bezogen auf das Gesamtgewicht der Zusammensetzung, ausmacht.

8. Zusammensetzung nach einem der Ansprüche 1 bis 7, wobei die Zusammensetzung eine Viskosität von 20-70 mPa·s und eine Oberflächenspannung von 26,7-33,5 mN/m bei 25 °C und eine Viskosität von 8-11 mPa·s und eine Oberflächenspannung von 26,7-33,5 mN/m bei 30-70 °C aufweist, wobei die Viskosität unter Verwendung eines digitalen DV-I-Viskosimeters geprüft wird und die Oberflächenspannung unter Verwendung eines vollautomatischen Oberflächenspannungsmessgeräts BZY-1 geprüft wird.

9. Zusammensetzung nach einem der Ansprüche 1 bis 8, wobei die Zusammensetzung durch Mischen ihrer Komponenten unter einer Bedingung der Vermeidung einer lichtinduzierten Polymerisationsreaktion der Komponenten erhalten wird.

10. Verfahren zur Herstellung der Zusammensetzung zum 3D-Tintenstrahldrucken einer Trägerstruktur nach einem der Ansprüche 1 bis 9, umfassend die folgenden Schritte unter der Bedingung der Vermeidung der lichtinduzierten Polymerisationsreaktion der Komponenten der Zusammensetzung:
1) Gleichmäßiges Mischen der Komponenten mit Ausnahme des Photoinitiators, um ein erstes Gemisch zu erhalten; dann Zugabe des Photoinitiators in das erste Gemisch, um ein zweites Gemisch zu erhalten; und
2) Filtrieren des zweiten Gemisches, um ein Filtrat zu erhalten, das die Zusammensetzung zum 3D-Tintenstrahldrucken der Trägerstruktur ist.

11. Eine 3D-Tintenstrahldruckvorrichtung, die einen Tintenstrahldruckkopf umfasst, wobei der Tintenstrahldruckkopf in der Lage ist, das Drucken unter Verwendung der Zusammensetzung zum 3D-Tintenstrahldrucken einer Trägerstruktur gemäß einem der Ansprüche 1 bis 9 durchzuführen.

12. 3D-Tintenstrahldruckverfahren, wobei ein Druckprozess davon ein Drucken einer Trägerstruktur durch die 3D-Tintenstrahldruckvorrichtung nach Anspruch 11 unter Verwendung der Zusammensetzung zum 3D-Tintenstrahldrucken einer Trägerstruktur nach einem der Ansprüche 1 bis 9 umfasst.

13. 3D-Tintenstrahldruckverfahren nach Anspruch 12, ferner umfassend ein Drucken eines von der Trägerstruktur getragenen Zielobjekts.

14. Trägerstruktur, gedruckt mit der 3D-Tintenstrahldruckvorrichtung nach Anspruch 11 und unter Verwendung der Zusammensetzung zum 3D-Tintenstrahldrucken einer Trägerstruktur nach einem der Ansprüche 1 bis 9.

## Revendications

1. Composition pour impression à jet d'encre 3D d'une structure de support, dans laquelle la composition comprend 18 à 40 parties en poids d'un matériau en vrac photodurcissable, 2 à 30 parties en poids d'un matériau promoteur de réaction fonctionnelle, un matériau non durcissable miscible à l'eau, un photo-initiateur et un agent auxiliaire basées sur un poids total de la composition, le matériau promoteur de réaction fonctionnelle contient un groupe carboxyle et de l'hydrogène réactif dans une structure moléculaire de celui-ci, et l'hydrogène réactif est capable de réagir avec un radical libre de peroxy ;
dans laquelle le matériau promoteur de réaction fonctionnelle a une structure représentée par la formule générale suivante (I) : 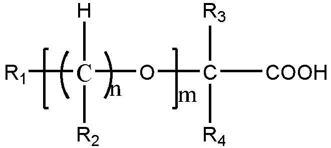
R₁, R₂, R₃ et R₄ sont indépendamment sélectionnés parmi au moins un du groupe constitué de l'hydrogène, d'un hydroxyle, carboxyle, alcoxy, aryloxy, d'un anneau hétérocyclique contenant de l'azote, d'un anneau hétérocyclique contenant de l'oxygène et d'un anneau benzène, et lorsque R₁ est hydrogène, au moins un de R₃ et R₄ est sélectionné parmi hydrogène ; et n et m sont indépendamment sélectionnés parmi un entier supérieur ou égal à 1, n≤7 et m≤14 ;
dans laquelle le matériau en vrac photodurcissable est un composé de (méth)acrylate et/ou un composé de (méth)acrylamide.

2. Composition selon la revendication 1, dans laquelle au moins un de R₁, R₂, R₃ et R₄ est hydrogène.

3. Composition selon la revendication 1 ou 2, dans laquelle n≤2 et m≤2.

4. Composition selon l'une quelconque des revendications 1 à 3, dans laquelle l'alcoxy est un groupe alcoxy de faible niveau en C1-3.

5. Composition selon l'une quelconque des revendications 1 à 4, dans laquelle le matériau promoteur de réaction fonctionnelle est de 5 à 10 parties en poids, le matériau non durcissable miscible à l'eau est de 48 à 78 parties en poids, le photo-initiateur est de 1 à 5 parties en poids et l'agent auxiliaire est de 0,4 à 5 parties en poids.

6. Composition selon l'une quelconque des revendications 1 à 5, dans laquelle le matériau non durcissable miscible à l'eau est un polyol.

7. Composition selon la revendication 6, dans laquelle basées sur le poids total de la composition, un composé monofonctionnel ayant un poids moléculaire supérieur ou égal à 300 dans le matériau en vrac photodurcissable représente 15 à 30 parties en poids, et un composé ayant un poids moléculaire supérieur à 50 et inférieur à 277 dans le matériau en vrac photodurcissable représente 3 à 6 parties en poids, et un composé de (méth)acrylate multifonctionnel dans le matériau en vrac photodurcissable représente 0 à 4 parties en poids basées sur le poids total de la composition.

8. Composition selon l'une quelconque des revendications 1 à 7, dans laquelle la composition a une viscosité de 20 à 70 mPa·s et une tension de surface de 26,7 à 33,5 mN/m à 25 °C, et a une viscosité de 8 à 711 mPa·s et une tension de surface de 26,7 à 33,5 mN/m à 30 à 70 °C, dans laquelle la viscosité est testée en utilisant un viscosimètre numérique DV-I, et la tension de surface est testée en utilisant un tensiomètre de surface entièrement automatique BZY-1.

9. Composition selon l'une quelconque des revendications 1 à 8, dans laquelle la composition est obtenue en mélangeant des composants de celle-ci à condition d'éviter une réaction de polymérisation photo-induite des composants.

10. Procédé de préparation de la composition pour impression à jet d'encre 3D d'une structure de support selon l'une quelconque des revendications 1 à 9, comprenant les étapes suivantes à condition d'éviter la réaction de polymérisation photo-induite des composants de la composition :
1) mélanger uniformément les composants autres que le photo-initiateur pour obtenir un premier mélange ; puis ajouter le photo-initiateur dans le premier mélange pour obtenir un second mélange ; et
2) filtrer le second mélange, pour recueillir un filtrat, qui est la composition pour impression à jet d'encre 3D de la structure de support.

11. Dispositif d'impression à jet d'encre 3D, comprenant une tête d'impression à jet d'encre, dans lequel la tête d'impression à jet d'encre est capable de réaliser une impression en utilisant la composition pour impression à jet d'encre 3D d'une structure de support selon l'une quelconque des revendications 1 à 9.

12. Procédé d'impression à jet d'encre 3D, dans lequel un processus d'impression de celui-ci comprend imprimer, par le dispositif d'impression à jet d'encre 3D selon la revendication 11, une structure de support en utilisant la composition pour impression à jet d'encre 3D d'une structure de support selon l'une quelconque des revendications 1 à 9.

13. Procédé d'impression à jet d'encre 3D selon la revendication 12, comprenant en outre imprimer un objet cible avec le support de la structure de support.

14. Structure de support, imprimée par le dispositif d'impression à jet d'encre 3D selon la revendication 11 et en utilisant la composition pour impression à jet d'encre 3D d'une structure de support selon l'une quelconque des revendications 1 à 9.
